# DEMANDE DE BREVET EUROPEEN

(11) **EP 0 949 139 A1**
(43) Date de publication de la demande: **13.10.1999**
(21) Numéro de dépôt: 98430009.5
(22) Date de dépôt: 09.04.1998
(51) Int. Cl.: B62H 3/08, E05B 67/36

(54) **Dispositif antivol pour vélo fixe et public**

(71) Demandeur: van den Bergh, Patrice, 84440 Robion (FR); Baulot, François, 13800 Istres (FR)
(72) Inventeur: van den Bergh, Patrice, 84440 Robion (FR); Baulot, François, 13800 Istres (FR)

(57) **Abrégé**

La présente demande de dépôt de brevet concerne un dispositif antivol pour vélo, fixe, à disposition du public, sans système de serrure installé à demeure.

Il est constitué d'un châssis en cornières (1/4/18) et (2) supportant un bras (9) sis à l'angle de la traverse arrière (1) et du longeron (2) muni d'un doigt de verrouillage (10). Parallèlement au longeron (2), un verrou est constitué d'un arbre (12) muni à l'arrière d'un receveur (13) et à mi-distance des traverses intermédiaire (4) et avant (18) d'un crochet (17) Le receveur est perce de 2 trous, l'un (14) permet l'introduction du barillet l'autre du doigt de verrouillage (10).

L'utilisateur après avoir installé son vélo dans le dispositif bascule le receveur sur le doigt de verrouillage et y introduit son barillet dont le panneton s'engage derrière une découpe de l'aile de la section en Té (16) bouchant le receveur (13) interdisant la manoeuvre du verrou. Le vélo est ainsi immobilisé par la roue arrière, le cadre et la roue avant.

## Description

### INDICATION DE L'ETAT TECHNIQUE ANTERIEURE FAISANT RESSORTIR LE PROBLEME TECHNIQUE POSE:

L'utilisation du vélo comme moyen de locomotion est, par les problèmes que pose la circulation urbaine, promis à un avenir certain. Toutefois, laisser son vélo sur un trottoir, vaguement attaché à un réverbère ou une grille, voire à un arceau spécialement mis en place, ou il est attaché par un ou deux morceaux de câble munis de serrures, avec le risque certain de se le faire voler, paraît illusoire et est un frein à son essor.

La présente demande de brevet d'invention expose un dispositif simple d'emploi, peu onéreux, pratique et sûr, dont la description se trouve plus loin.

Il est à noter: que le dispositif ne comporte pas en de lui de serrure sous quelque forme que ce soit. C'est l'utilisateur lui même, qui la dispose après avoir introduit son vélo dans le dispositif. Ce point nous semble essentiel quant à la responsabilité de ceux qui mettront à la disposition du public, le dispositif.

### DESCRIPTION

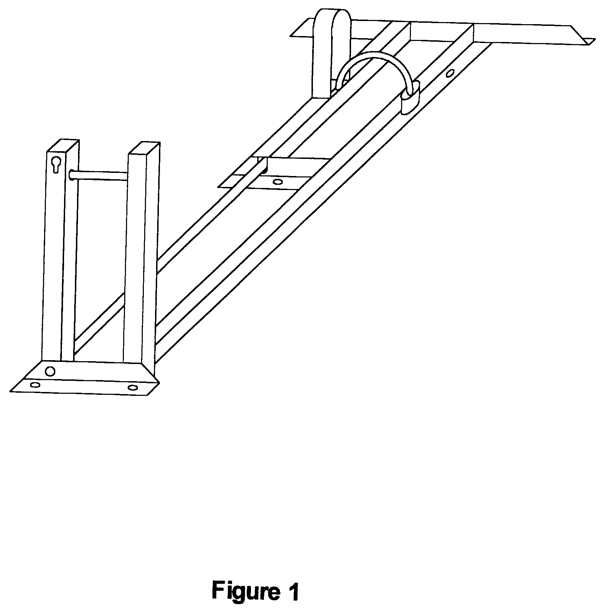

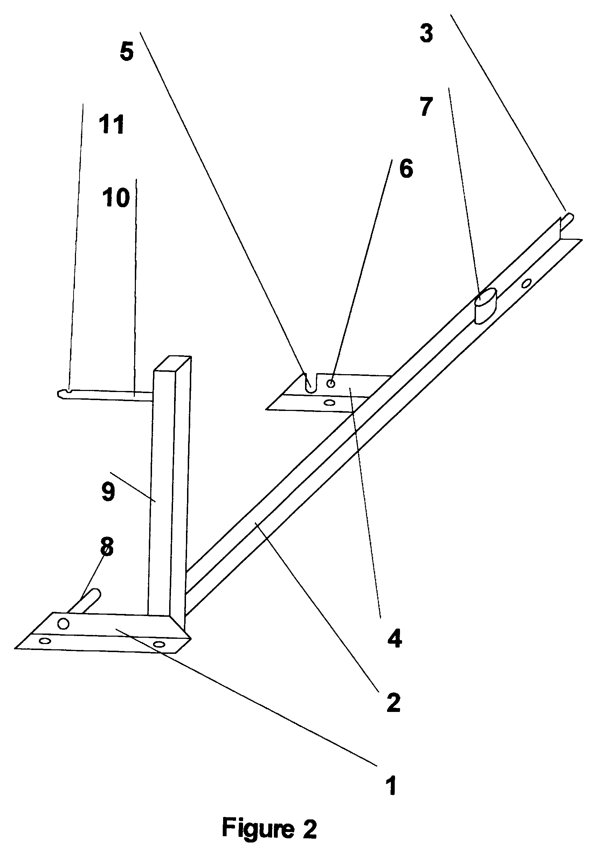

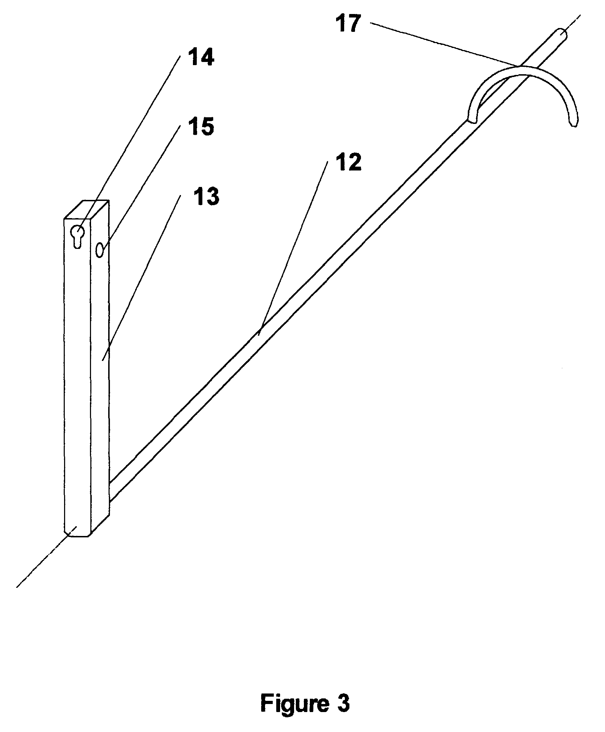

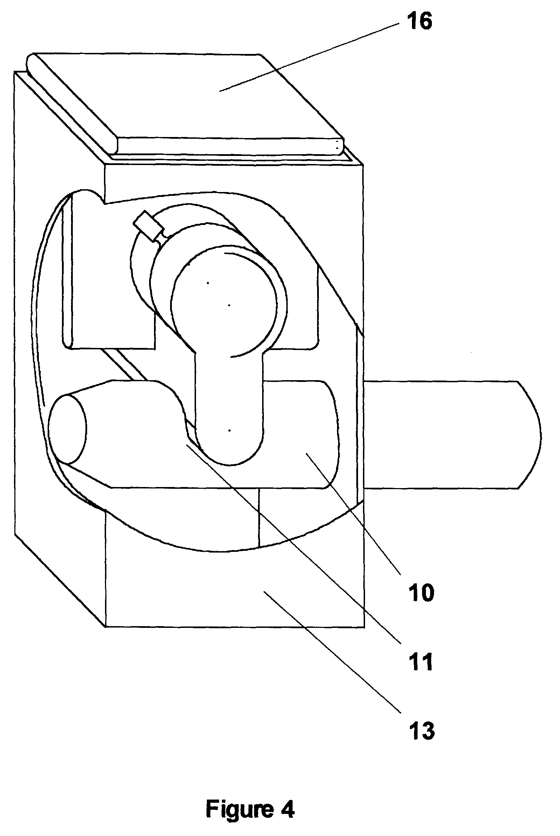

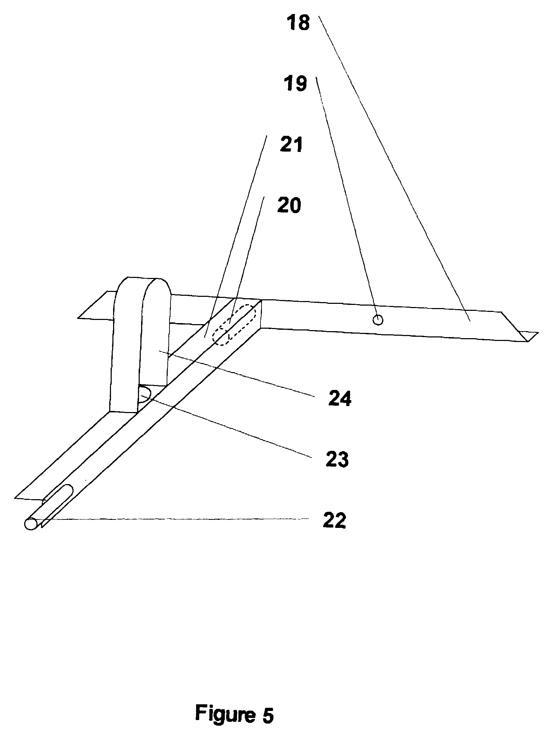

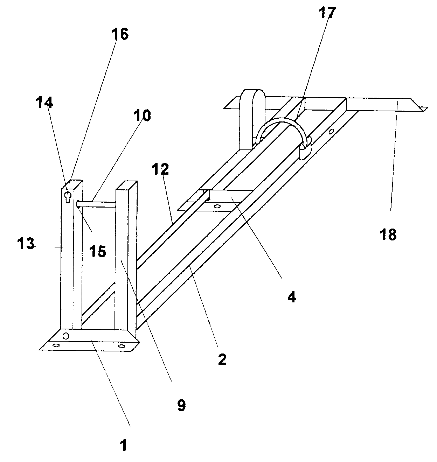

Le dispositif (figure 1) est constitué
D'un châssis composé: (figure 2)
   d'une traverse arrière (1) recevant d'une part un longeron (2) ici en cornière perpendiculaire à la traverse (1) et horizontal, terminé par un téton (3). Il porte, parallèlement et dans la même direction que la traverse arrière (1), une traverse intermédiaire (4) grugée en (5) et percée d'un trou (6). Une bague de tube (7) axée verticalement, à mi distance entre l'extrémité libre du longeron (2) et la traverse intermédiaire (4), est soudée au longeron sur le coté opposé du longeron (2) à la traverse intermédiaire (4). La traverse arrière présente, d'autre part, un axe d'articulation (8) de même direction que le longeron (2) et parallèle à celui-ci. A l'angle formé par la traverse arrière (1) et le longeron (2) s'élève verticalement un bras (9) ici en tube de section carrée, bouché en son extrémité supérieure. Il reçoit perpendiculairement un doigt de verrouillage (10) de même direction que la traverse arrière (1) et parallèle à celle-ci. L'extrémité libre du doigt de verrouillage (10) est creusée, en sa partie supérieure, d'une rainure (11) perpendiculaire à son axe et à la verticale de l'axe d'articulation (8).
D'un verrou composé: (figure 3)
   d'un arbre(12) s'articulant en son extrémité arrière sur l'axe d'articulation (8) du châssis d'où s'élève verticalement, en cet endroit, un receveur (13) ici en tube de section carrée, dont l'extrémité libre est à la même hauteur que l'extrémité libre du bras (9). L'arbre repose dans le grugeage (5) de la traverse intermédiaire (4). Le receveur (13) est percé de deux trous. Le premier (14), si on regarde le dispositif par l'arrière (traverse arrière (1) à ses pieds) s'ouvre vers soi et est de formes et de diamètres suffisants pour assurer avec le jeu juste nécessaire le passage à un demi cylindre de sécurité du commerce dit aussi barillet. Le second (15), s'ouvre sur une face adjacente à la face précitée, et est de position et de diamètre autorisant au receveur (13) de venir s'engager sur le doigt de verrouillage (10). Le receveur (13) est bouché en son extrémité supérieure par une section ici en Té (16), axée parallèlement au doigt de verrouillage (10), dont l'aile, sise à l'intérieur du receveur (13) présente une découpe assurant le passage du barillet dont l'axe est concourant à l'axe du trou (14). Elle (16) est positionnée de sorte que, le barillet, engagé dans le receveur, son panneton en position de repos, soit derrière elle et la partie saillante du barillet engagée dans la rainure (11) du doigt de verrouillage (10) (figure 4). Vers l'avant de l'arbre (12), et soudé perpendiculairement à celui-ci, un crochet (17) demi circulaire, a son extrémité libre engagée dans la bague de tube (7), le receveur (13) étant toujours en position verticale.
D'un élément de protection composé: (Figure 5)
   d'une traverse avant (18) ici en cornière, horizontale et parallèle à la traverse arrière (1), percée d'un trou (19) ou s'engage le téton (3) du longeron (2). Elle (18) reçoit un axe d'articulation (20) sur lequel vient aboutir l'arbre (12). Un support (21), ici en cornière, de direction opposée et parallèle au longeron (2), est terminé par téton (22) se logeant dans le trou (6) de la traverse intermédiaire (4). Il (21) est grugé (23) afin d'autoriser le libre positionnement du crochet (17). Chapeautant le grugeage (23), un arceau (24), ici en fer plat, assure, lorsque le verrou a basculé de 90°,la protection du crochet (17) dont la pointe est alors en l'air.

Des trous sont percés verticalement en plusieurs points des traverses (1/4/18) et du longeron (2) pour fixer l'ensemble au sol et assurer l'immobilité des différents éléments entre eux.

### FONCTIONNEMENT:

L'utilisateur introduit son vélo, le dispositif étant ouvert, c'est à dire le receveur (12) à plat sur le sol, légèrement en biais, dans le sens normal de marche, par l'arrière du dispositif, entre le longeron (2) et l'arbre (12). passe la roue avant au dessus de la traverse intermédiaire (4). Il rabat le vélo en butée contre le bras (9) ce qui a pour effet de faire passer le doigt de verrouillage (10) au travers de la roue arrière et du triangle du cadre constitué par: 1° le tube selle - pédalier, 2° les barres selle - moyeu de roue arrière, enfin 3° les barres pédalier - moyeu arrière.

Il saisit alors le receveur (13) et le ramène en position verticale, ce qui entraîne un mouvement de rotation de l'arbre (12) qui fait basculer le crochet (17) au travers de la roue avant du vélo; Ce crochet (17) vient aboutir dans une bague de tube (7) soudé au longeron (2), du coté opposé à l'arbre (12) et en regard du crochet (17), pour en protéger la pointe.

Le doigt de verrouillage (10) étant en position dans le receveur, l'utilisateur introduit le barillet qui lui est propre, dans le trou (14) du receveur (13) prévu à cet effet. En tournant et retirant la clé, il positionne le panneton du barillet derrière la partie pleine de la section de Té (16), empêchant son retrait. La partie plate du barillet, faisant partiellement saillie de la section de Té (16), vient occuper alors la rainure (11) du doigt de verrouillage (10), condamnant tout mouvement du verrou. Le vélo est rendu solidaire de l'ensemble par trois points: la roue avant, le cadre, la roue arrière.

## Revendications

1. Dispositif antivol pour vélo, fixe et public, caractérisé en ce qu'il nécessite pour son verrouillage, un demi cylindre de sécurité normalisé du commerce, se logeant dans le receveur (13).

2. Dispositif, selon la première revendication, caractérisé en ce que le receveur (13) est constitué d'un tube carré percé de deux trous, le premier (14) s'ouvrant vers soi si l'on considère l'ensemble par l'arrière (traverse arrière (1) à ses pieds), permet l'introduction dans le receveur d'un demi cylindre de sécurité du commerce dit aussi "barillet". Le second (15) s'ouvrant sur la face regardant le châssis, autorise l'engagement du receveur (13) sur le doigt de verrouillage (10).Le receveur (13) est bouché en son extrémité supérieure par une section de Té (16), dont l'aile introduite à l'intérieur du receveur (13) présente une découpe positionnée de manière à ce que l'axe de la partie circulaire de cette découpe et l'axe du trou (14) de barillet du tube de receveur (13) coincident, afin de permettre le passage du barillet.

3. Dispositif, selon la revendication **1)**, caractérisé en ce que l'aile de la section de Té (16), à l'intérieur du tube de receveur (13), est positionné de telle sorte que, le barillet, introduit et au repos, dans le receveur (13), et passant par la découpe de la section de Té (16) son panneton soit positionné derrière l'aile de la section de Té (16) empêchant l'extraction du barillet du receveur.

4. Dispositif, selon la revendication **1)**, caractérisé en ce qu'il est constitué d'un châssis composé de traverses (1/4/18) et d'un longeron (2), d'un receveur (13) à l'arrière et d'un coté, solidaire d'un arbre tubulaire (12) coté du châssis opposé au longeron (2), parallèle à l'axe du châssis, présentant à mi distance entre les traverses avant et intermédiaire un crochet (17), s'articulant sur des axes (8/20). En face du receveur, à l'angle formé par la traverse arrière (1) et le longeron (2) s'élève un bras (9) traversé en son extrémité supérieure par un doigt de verrouillage (10) creusé, en son extrémité libre et en sa partie supérieure, d'une rainure (11) perpendiculaire à l'axe du doigt et hèmi - cylindrique, positionnée de telle sorte que, le receveur (13) engagé sur le doigt (10), la rainure (11) coïncide avec la découpe de la section de Té (16). Des trous ménagés verticalement dans les traverses (1/4/18) et le longeron (2) assurent le fixation de l'ensemble au sol et le maintien des différents éléments entre eux.

5. dispositif, selon les précédentes revendications, caractérisé en ce que, lorsque le receveur (13) est engagé sur le doigt de verrouillage (10), la partie plate du barillet, fait partiellement saillie de la découpe de la section de Té (16). Cette saillie vient alors se loger dans la rainure (11) du doigt de verrouillage (10), interdisant la manoeuvre du verrou

6. Dispositif, selon la première revendication, caractérisé en ce que le bras (9) et le receveur (13), maintiennent le vélo vertical et que la traverse intermédiaire assure sa localisation par rapport aux autres éléments du dispositif.

7. Dispositif, selon la revendication **4)**, caractérisé en ce que le crochet (17) à l'avant de l'arbre (12) est, par la rotation du verrou, passé au travers de la roue avant du vélo, la condamnant ainsi, et vient se loger dans une bague de tube(7), soudé au longeron (2), qui forme protection de sa pointe
